# EUROPEAN PATENT APPLICATION

(11) **EP 4 383 388 A1**
(43) Date of publication of application: **12.06.2024**
(21) Application number: 22212055.2
(22) Date of filing: 07.12.2022
(51) Int. Cl.: H01M 10/052, H01M 4/134, H01M 4/04, H01M 4/02

(54) **ANODE-FREE BATTERY CELL**

(71) Applicant: Belenos Clean Power Holding AG, 2502 Bienne (CH)
(72) Inventor: METTAN, Yoann, 1902 Evionnaz (CH)
(74) Representative: ICB SA

(57) **Abstract**

The present invention relates to an anode-free battery cell comprising a cathode, an electrolyte and an electronic conductor provided at the anode side of the battery cell, wherein the battery cell further comprises a high surface area substrate provided between the cathode and the electronic conductor, wherein at least a portion of a surface of the high surface area substrate contacts at least a portion of a surface of the electronic conductor. The present invention further relates to an anode-free battery comprising a stack of between 2 and 20 inventive anode-free battery cells.

## Description

### Technical field of the invention

The present invention relates to anode-free battery cells and anode-free batteries comprising a stack of anode-free battery cells.

### Background

Recently, the development and improvement of batteries for various devices requiring batteries, such as mobile phones, wireless household appliances and electric vehicles and bikes, has become an important field of research and interest. In particular the field of secondary batteries is advancing, by the development of smaller and lighter batteries, having an improved lifetime.

In accordance with these recent development, a lithium secondary battery with lithium metal as active material has attracted attention. Lithium metal is known to have the characteristics of a low redox potential (-3.045 V vs. standard hydrogen electrode) as well as a high weight energy density (3860 mAh/g), which makes lithium metal an interesting material for the negative electrode (anode).

It is known to use lithium metal as a negative electrode by attaching a lithium foil to the anode current collector. However, as lithium is an alkali metal, it reacts with water and oxygen because of its high reactivity. This has the disadvantage that such batteries are considered unsafe, because of the risk of its explosion upon, for example, a leak to the environment. The handling of lithium foils is further also dangerous.

Further, upon exposure of lithium metal to the atmosphere, an oxide layer is typically formed as a result of oxidation. Such an oxide layer tends to act as an insulator, thereby increasing the electric resistance and thus reducing the performance of the battery.

In other to solve this issue, anode-free battery cells have been developed. Such battery cells comprise typically only an anode current collector, and a lithium layer as anode is formed (deposited) in-situ on the anode current collector during the first charging of the battery.

US2020/0203757 discloses a lithium secondary battery comprising a positive electrode, a negative electrode, and a separator and an electrolyte interposed between the electrodes. The negative electrode comprises a negative electrode current collector, and during charging lithium metal is formed on the negative electrode current collector.

US2016/0261000 discloses an anode-free rechargeable battery comprising an anode current collector, a cathode, a separator placed between the anode current collector and the cathode. The battery further comprises an electrolyte including a salt or salt mixture containing an active cation dissolved in a solvent or a solvent mixture. The active cation can be lithium, sodium, potassium, magnesium, calcium, zinc, aluminium or silver. During the first charging cycle, a layer of the metal of the cation is formed on the anode current collector.

The disadvantages with such anode-free batteries is that dendrites are easily formed, leading to short circuiting and loss of performance of the battery cell. A further disadvantage includes a limited lifetime of such anode-free batteries, which for example includes a limited number of charge/discharge cycles.

### Summary of the invention

It is an aim of the present invention to overcome one or more of the foregoing drawbacks. It is an aim of the present invention to provide an anode-free battery cell and anode-free battery having a reduced risk of short-circuiting, compared to anode-free battery cells and anode-free batteries of the state of the art.

It is a further aim to provide an anode-free battery cell and an anode-free battery having an improved safety.

It is a further aim to provide an anode-free battery cell and an anode-free battery having an excellent performance.

It is a further aim to provide an anode-free battery cell and an anode-free battery having an improved lifetime, for example anode-free battery cells and anode-free batteries which can resist a higher number of charging/discharging cycles.

According to a first aspect of the invention, there is provided an anode-free battery cell as set out in the appended claims.

The anode-free battery cell comprises a cathode current collector, a cathode, an electrolyte and an electronic conductor provided at the anode side of the battery cell.

The cathode current collector can be any cathode current collector known in the art. For example the cathode current collector can comprise or substantially consist of aluminium.

Advantageously, the cathode comprises an active material. Advantageously, the active material comprises or substantially consists of one or more of an alkali metal, an alkaline earth metal, or a transition metal. Advantageously, the alkali metal is lithium or sodium. For example, the active material can comprise or substantially consist of alkali metal-, alkaline earth metal-, or transition metal-based intercalation compounds. Advantageously, the alkaline earth metal is magnesium. Advantageously, the transition metal is aluminium or zinc. Non-limiting examples of intercalation compounds include lithium iron phosphate (LFP) and sodium iron phosphate (NFP). Further non-limiting examples of active materials are lithium nickel cobalt aluminium oxide (NCA), lithium nickel cobalt manganese oxide (NMC), lithium manganese oxide (LMO), lithium nickel manganese oxide (LNMO) and lithium cobalt oxide (LCO).

Advantageously, the cathode further comprises an electronically conductive compound. The electronically conductive compound can be any electrically conductive compound known in the art.

Advantageously, the cathode further comprises a binder. The binder can be any binder known in the art.

The electrolyte can be any type of electrolyte known in the art. Advantageously, the electrolyte is a solid (state) electrolyte or a liquid electrolyte. When the electrolyte is a solid (state) electrolyte, the electrolyte advantageously comprises a ceramic, a polymer, or a combination of two or more thereof. The electrolyte can be a non-aqueous electrolyte.

Advantageously, and in particular when the electrolyte is a liquid electrolyte, the anode-free battery cell further comprises a separator, such as a separator membrane, provided between the cathode and the high surface area substrate. The separator can be any separator known in the art.

The anode-free battery cell further comprises a high surface area substrate. The high surface area substrate is provided between the cathode and the electronic conductor.

At least a portion of a (first) surface of the high surface area substrate contacts at least a portion of a surface of the electronic conductor.

Advantageously, at least a portion of a (second) surface of the high surface area substrate contacts the electrolyte. Advantageously, the electronic conductor does not contact the electrolyte.

Advantageously, the electronic conductor comprises or substantially consists of at least one metal. Advantageously, the metal is copper, a copper alloy, nickel, a nickel alloy, lithium, a lithium alloy, or steel. The steel can be, without being limited thereto, stainless steel or carbon steel. For example, the electronic conductor can comprise a nickel-plated copper foil.

Alternatively, and alternatively or additionally, the electronic conductor comprises or substantially consists of a polymer. Preferred examples of polymers, without being limited thereto, include poly(3,4-ethylenedioxythiophene) (PEDOT) and polyaniline.

Alternatively, and alternatively or additionally, the electronic conductor comprises or substantially consists of carbon. Preferred examples of carbon, without being limited thereto, include carbon black, carbon nanotubes, graphite or a combination of two or more thereof.

Alternatively, and alternatively or additionally, the electronic conductor comprises or substantially consists of one or more of an oxide, a sulphide, a nitride, a carbide, or a silicide.

Non-limiting examples of oxides include ruthenium oxide, iron oxide, manganese oxide, vanadium oxide, nickel oxide, copper oxide, and zinc oxide.

Non-limiting examples of sulphides include transition metal sulphides, such as titanium sulphide (TiS₂), and vanadium sulphides (VS and VS₂).

Non-limiting examples of nitrides include titanium nitride and vanadium nitride.

Non-limiting examples of carbides include silicon carbide, and transition metal carbides, such as aluminium carbide and titaniumcarbide.

Non-limiting examples of silicides include aluminium silicides.

Advantageously, the high surface area substrate has a porosity of at least 40 %, wherein the porosity is measured by X-ray computed tomography. With "a porosity of at least 40 %" is meant in the light of the present disclosure that the high surface area substrate has a porosity of at least 40 % at every location or area of the substrate.

For example, the high surface area substrate can comprise a first area having a first porosity and at least a second area having a second porosity, wherein the first porosity and the second porosity are different and are, individually, at least 40 %. Further, a substrate having a porosity of at least 40 % is, in the light of the present invention, considered a porous substrate.

Advantageously, the high surface area substrate comprises or substantially consists of an organic compound. Advantageously, the organic compound comprises or substantially consists of, i.e. is, a polymer. Alternatively, and advantageously, the organic compound comprises or substantially consists, i.e. is, a polymorph of carbon.

Advantageously, the polymer is selected from the group consisting of cellulose, regenerated cellulose (viscose), polypropylene, polyethylene, polyvinylidene difluoride, polytetrafluoroethylene, polyurethane, aramide, and silk. Further examples of the organic compound include wool and polyaramide.

Non-limiting examples of a polymorph of carbon include graphene, carbon nanotubes, graphite, hard carbon, and carbon black.

Advantageously, and additionally or alternatively, the high surface area substrate comprises or substantially consists of an inorganic compound. Advantageously, the inorganic compound comprises or substantially consists of lithium lanthanum zirconium oxide (LLZO) and/or a silica polymorph. Non-limiting examples of silica polymorphs include quartz, cristobalite, tridymite, coesite, stishovite, lechatelierite, and opal.

Optionally, the high surface area substrate can further comprise an electrically conductive particulate compound, i.e. an electrically conductive compound comprising particles. The inventors have surprisingly discovered that by providing an electrically conductive particulate compound within the high surface area substrate, in use of the anode-free battery cell, deposition of the one or more of an alkali metal, an alkaline earth metal, or a transition metal comprised within the active material of the cathode will easier, e.g. faster, generate an electrically conduction that is sufficiently high for the battery cell to be operational, as compared to a battery cell comprising a high surface area substrate without the particulate compound. The inventors believe that this is realised because the deposited metal (i.e. metal derived from ions of the one or more of an alkali metal, an alkaline earth metal, or a transition metal comprised within the active material of the cathode) will be electrically connected between each other by means of the electrically conductive particulate compound. In other words, less deposition of metal ions, during use, is required for the battery cell to show a sufficiently high electrical conduction.

Advantageously, when the high surface area substrate comprises an electrically conductive particulate compound, the particles are arranged or provided within the high surface area substrate so that the particles are electrically insulated. For example, the particles can be arranged so that each individual particle is physically insulated, i.e. does not contact, other particles.

Advantageously, when the high surface area substrate comprises an electrically conductive particulate compound, the compound comprises a metal, an alloy of two or more metals, a polymorph of carbon, or combinations of two or more thereof. Examples of polymorphs of carbon are advantageously as described hereinabove, and are in particular carbon nanotubes or graphene. A particular example of an alloy of two or more metals is an intermetallic.

Advantageously, when the high surface area substrate comprises an electrically conductive particulate compound, the particles have an average size between 1 nm and 1 mm, such as nanoparticles or microparticles. The particles can have varying average sizes or average diameters.

The high surface area substrate can have any shape or geometry or structure providing the substrate with a high surface area. Advantageously, the high surface area substrate is a membrane, a foam, a nonwoven, a woven textile or a knitted textile. Advantageously, the membrane and the foam are open cell membranes and foams.

Advantageously, the anode-free battery cell further comprises an anode lead extension. Advantageously, at least a portion of a surface of the anode lead extension contacts at least a portion of a surface of the electronic conductor. Advantageously, the anode lead extension does not contact the high surface area substrate.

Advantageously, the anode lead extension comprises or substantially consists of at least one metal. Advantageously, the metal is copper, a copper alloy, nickel, a nickel alloy, or steel. The steel can be, without being limited thereto, stainless steel or carbon steel. Advantageously, the anode lead extension does not comprise lithium or a lithium alloy.

Advantageously, the anode-free battery cells according to the present disclosure are secondary batteries.

According to a second aspect of the invention, there is provided an anode-free battery as set out in the appended claims. The anode-free battery comprises a stack of x anode-free battery cells according to the first aspect of the present invention, wherein x is between 2 and 20, preferably between 2 and 10, such as between 2 and 5.

Advantages of the anode-free battery cells and anode-free batteries of the present disclosure include, without being limited thereto, a reduced formation of dendrites, which leads to a reduced risk for short-circuiting. Consequently, the battery cells and batteries of the present disclosure have an improved lifetime, i.e. they can withstand a higher number of charge/discharge cycles.

### Description of the figures

Aspects of the invention will now be described in more detail with reference to the appended drawings, wherein same reference numerals illustrate same features and wherein:
- Figure 1 schematically represents an anode-free battery cell according to the present disclosure;
- Figure 2 schematically represents a further anode-free battery cell according to the present disclosure; and
- Figure 3 schematically represents yet another anode-free battery cell according to the present disclosure;
- Figure 4 schematically represents an anode-free battery comprising a stack of anode-free battery cells according to the present disclosure;
- Figure 5 shows the voltage vs. specific charge for several charging/discharging cycles for an anode-free battery cell according to the present disclosure;
- Figure 6 shows the voltage vs. specific charge for several charging/discharging cycles for a reference anode-free battery cell;
- Figure 7 shows the voltage vs. specific charge for several charging/discharging cycles for a reference lithium metal battery cell;
- Figure 8 shows the voltage vs. specific charge for a charging/discharging cycle for an anode-free battery cell according to the present disclosure, a reference anode-free battery cell, and a reference lithium metal battery cell;
- Figure 9 shows the voltage vs. specific charge for the second discharging cycle for an anode-free battery cell according to the present disclosure, a reference anode-free battery cell, and a reference lithium metal battery cell.

### Detailed description of the invention

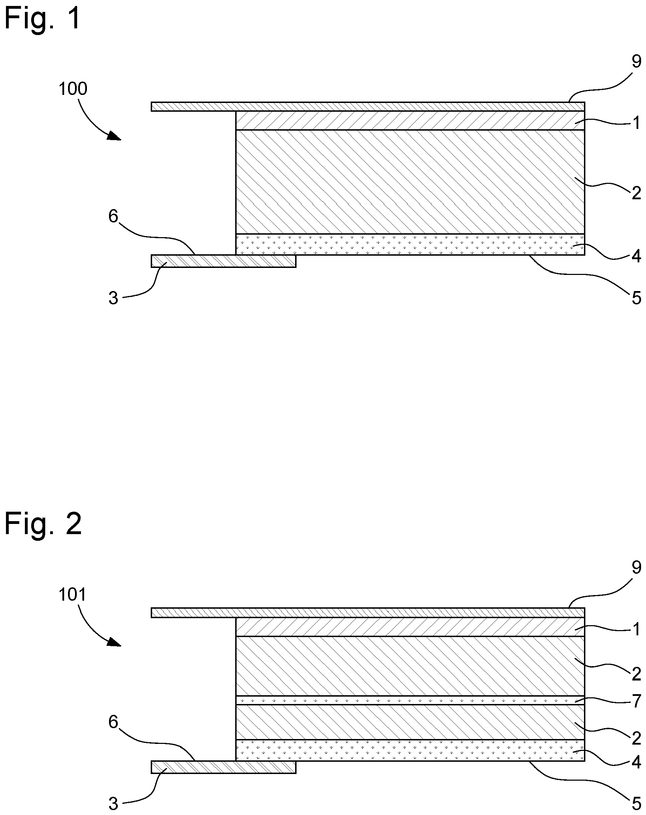

Figure 1 shows an anode-free battery cell 100 according to the present disclosure. The battery cell 100 comprises a cathode current collector 9, a cathode 1, and an electrolyte 2.

The cathode current collector 9 is advantageously as described hereinabove. Preferably, the cathode current collector 9 comprises or substantially consists of aluminium.

Advantageously, and as is known in the art, the cathode current collector 9 extends from the anode-free battery 100. In other words, the cathode current collector 9 advantageously has a portion extending from the stack comprising the high surface area substrate 4, the electrolyte 2, the optional separator 7, and the cathode 1. This can be realised by means of methods known in the art, for example by providing a cathode current collector 9 having a surface area that is larger than the surface area of the cathode 1. As is know, such an extension allows easy connection or coupling of the cathode current collector 9 to the electronic circuitry (not shown) to which the electronic conductor 3 is advantageously also connected or coupled.

The cathode 1 is advantageously as described hereinabove, and comprises an active material, an electronically conductive material and a binder.

The active material is advantageously as described hereinabove. Advantageously, the cathode comprises between 25 % and 99.7 % by weight of the active material based on the total weight of the cathode, such as between 40 % and 99.5 % by weight, preferably between 50 % and 99 % by weight, for example between 60 % and 97.5 % by weight, more preferably between 75 % and 95 % by weight.

Advantageously, the electronically conductive material comprises a carbon-comprising material, such as carbon fibres, carbon nanotubes, particulate carbon (e.g. a powder), or a combination of two or more thereof. Advantageously, the electronically conductive material is a carbon-based electronically conductive material, such as graphite.

Advantageously, the cathode comprises between 0.1 % and 30 % by weight of the electronically conductive material based on the total weight of the electrode, such as between 0.25 % and 25 % by weight, preferably between 0.5 % and 20 % by weight, for example between 1 % and 15 % by weight, more preferably between 2 % and 10 % by weight.

Advantageously, the binder comprises or substantially consists of rubber, such as styrene-butadiene rubber (SBR) or latex, polyvinylidene fluoride (PVDF), and polyvinylpyrolidone (PVP), in particular high molecular weight PVP.

Advantageously, the cathode comprises between 0.1 % and 30 % by weight of the binder based on the total weight of the cathode, such as between 0.25 % and 25 % by weight, preferably 0.5 % and 20 % by weight, for example between 0.75 % and 15 % by weight, more preferably between 1 % and 10 % by weight.

The anode-free battery cell 100 further comprises a high surface area substrate 4. The high surface area substrate 4 is advantageously provided at a side of the electrolyte 2 opposite the side of the cathode 1. The high surface area substrate 4 is advantageously as described hereinabove.

The high surface area substrate 4 can comprise or consist of a single layer, or can comprise a plurality of layers, i.e. two or more layers. When the high surface area substrate 4 comprises two or more layers, they can be the same or different. For example, they can have the same or a different composition, structure, shape, thickness or porosity. Advantageously, each layer has a porosity of at least 40 %, wherein the porosity is measured by means of X-ray tomography.

For example, the high surface area substrate 4 can comprise a first layer comprising or substantially consisting of an organic compound and a second layer comprising or substantially consisting of an inorganic compound. For example, the high surface area substrate 4 can comprise a first layer comprising or substantially consisting of cellulose or regenerated cellulose, and a second layer comprising or substantially consisting of LLZO.

The anode-free battery cell 100 further comprises an electronic conductor 3. At least a portion of a surface 6 of the electronic conductor 3 contacts at least a portion of a surface 5 of the high surface area substrate 4.

Advantageously, the electronic conductor 3 extends from the anode-free battery cell 100. In other words, the electronic conductor 3 advantageously has a portion extending from the stack comprising the high surface area substrate 4, the electrolyte 2, the cathode 1 and the cathode current collector 9. Such an extension allows easy connection or coupling of the electronic conductor 3 to the electronic circuitry (not shown) to which the cathode current collector 9 is advantageously also connected or coupled.

Advantageously, the surface 5 of the high surface area substrate 4 which is at least partially in contact with the electronic conductor 3 is different from the surface of the high surface area substrate 4 contacting the electrolyte 2. By this, short circuiting is advantageously prevented.

Advantageously, the electronic conductor initiates the deposition of the metal derived from the metal ions originating from the cathode active material - i.e. ions of the alkali metal, the alkaline earth metal or the transition metal of the active material of the cathode. Advantageously, the electronic conductor further sustains the deposition of the metal ions of the active material. In the light of the present invention, initiating and/or sustaining the deposition of the metal ions of the active material is considered as current conduction. By this working principle, an anode is formed in-situ on and within the high surface area substrate 4.

Advantageously, the metal ions are deposited on the surface(s) of the high surface area substrate 4. The inventors have discovered that by using a high surface area substrate 4 according to the present disclosure instead of a bare anode current collector or a traditional anode (for example a metallic layer (e.g. layer of metallic lithium) attached to an anode current collector), the formation of dendrites is highly reduced, and even prevented. Consequently, the risk of short-circuiting within the battery cell is largely reduced, thereby improving the safety and the lifetime of the battery cell.

Figure 2 shows a further anode-free battery cell 101. The battery cell 101 advantageously comprises a cathode current collector 9, a cathode 1, a high surface area substrate 4 and an electronic conductor 3 as disclosed hereinabove for battery cell 100 of Figure 1.

The anode-free battery cell 101 further comprises a separator 7. A separator 7 is used, in particular, when the electrolyte is liquid. Advantageously, the separator 7 is a separator membrane, i.e. a battery separator membrane. The separator 7 can be a porous separator membrane.

Advantageously, the separator comprises or substantially consists of one or more polymers. Advantageously, and alternatively or additionally, the battery separator membrane may be a ceramic material. For example, the separator can comprise a ceramic-loaded polymer.

Non-limiting examples of suitable polymers include polypropylene (PP), polyethylene (PE), polytetrafluoroethylene (PTFE) and polyvinylidenedifluoride (PVDF). PP, PE, PTFE and PVDF are preferred materials because of their chemically inert character. However they are not easily wetted, while it is preferred that the porous separator may absorb the liquid electrolyte. To this end the PP, PE, PTFE and/or PVDF may be treated with a surface treatment or a coating, such as a spray coating, a dip coating or a plasma coating - atmospheric pressure plasma or low pressure plasma.

The separator can comprise one or a plurality of layers. A multilayer separator of particular interest is a tri-layer PVDF-PE-PVDF separator, optionally ceramic loaded.

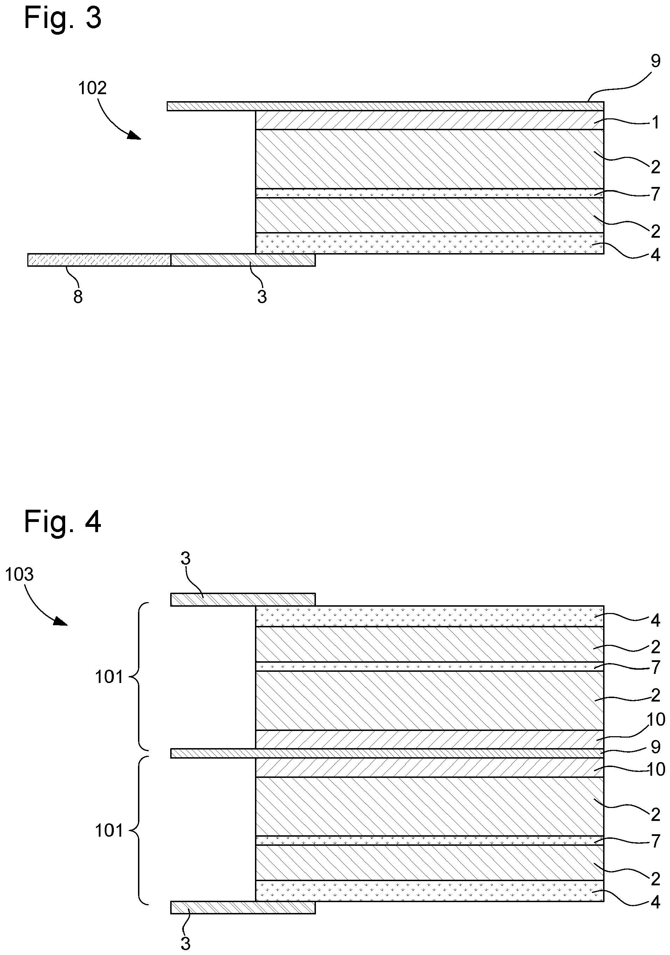

Figure 3 shows yet a further inventive anode-free battery cell 102. The anode-free battery cell 102 comprises a cathode current collector 9, a cathode 1, an electrolyte 2, a separator 7, a high surface area substrate 4 and an electronic conductor 3 as described hereinabove, for example for the battery cell 101 of Figure 2.

The battery cell 12 further comprises an anode lead extension 8. The anode lead extension 8 is advantageously as described hereinabove. Advantageously, the anode lead extension 8 is capable of current collection.

An anode lead extension 8 is in particular provided when the electronic conductor 3 comprises or substantially consists of lithium.

When the electronic conductor 3 does not comprise lithium, an anode lead extension 8 is preferably optionally provided. If provided, the anode lead extension 8 can have the same or a different composition as the lithium-free electronic conductor 3.

With "not comprising lithium" and "lithium-free" is meant in the present disclosure that the amount of lithium is below the detection limit of the analysis technique used to measure the amount of lithium present in the substrate or compound.

Figure 4 shows schematically an anode-free battery 103. The anode-free battery 103 comprises a stack of 2 anode-free battery cells 101 of Figure 2, wherein the (adjacent) battery cells 101 share a cathode current collector 9.

### Examples

Two anode-free battery cells were provided: one reference anode-free battery cell and one battery cell according to the present disclosure. Further, an anode comprising reference battery cell was provided as well.

All three battery cells comprised an aluminium cathode current collector. The aluminium cathode current collector had a surface area of 47.88 cm².

The cathode of each battery cell comprised 95 % by weight of NCA (CAS number 193214-24-3) as active material, 3 % by weight of PVDF binder, and 2 % by weight of carbon black as electronically conductive compound, based on the total weight of the cathode. The cathode was welded together to the aluminium cathode current collector.

7g of electrolyte was used in each battery cell. The electrolyte comprised 40 % by weight of lithium bis(fluorosulfonyl)imide (LiFSI), 30 % by weight of dimethoxyethane (DME) as solvent, and 30 % by weight of 1,1,2,2-Tetrafluoroethyl-2,2,3,3-tetrafluoropropylether (HFE-458, CAS number 16627-68-2), based on the total weight of the electrolyte.

A tri-layer ceramic-loaded PVDF-PE-PVDF separator membrane was provided as well in each battery cell.

The battery cell according to the present disclosure comprised a 14 µm thick cellulose material as the high surface area substrate. The electronic conductor used was a 50 µm thick lithium metal foil having a surface area of 4 cm², which is largely smaller than the surface area of the cathode current collector. A copper foil was used as the anode lead extension.

The anode-free reference battery cell comprised a 6 µm thick copper foil as anode current collector. The copper foil had a surface area of 49 cm², which is a bit larger than the surface area of the cathode current collector - as is known in the field.

The anode-comprising reference battery cell comprised a 25 µm lithium metal foil as anode and a copper foil as anode current collector. The lithium metal foil was welded to the copper foil as is known in the art. The surface area of the anode current collector was 49 cm²², which is a bit larger than the surface area of the cathode current collector - as is known in the field.

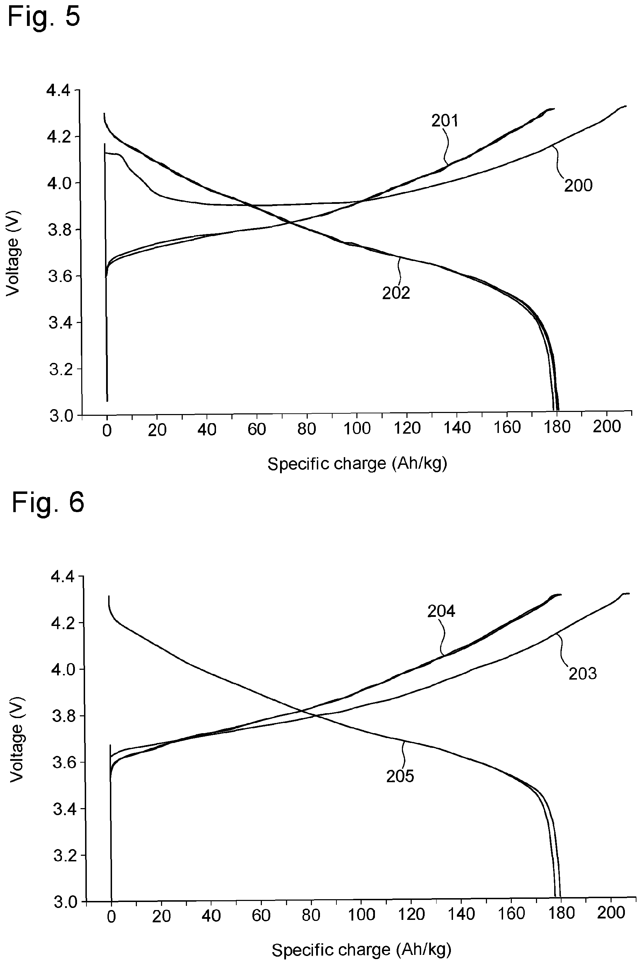

The battery cells were then charged and discharged, followed by two full charge/discharge cycles at C/10 (0.4 mA/cm²) between 4.3 V and 3.0 V. The measurements are presented in figures 5 to 9, where the voltage (Y-axis) is shown as a function of the specific charge (X-axis).

Figure 5 shows the results for anode-free battery cell according to the present disclosure, representing the voltage (V) as a function of the specific charge (expressed in Ah/kg). After the first charge, represented by line 200, the battery cell was discharged (line 202). Line 201 shows the values for the charging and line 202 for the discharging in the subsequent two full charge/discharge cycles. For the first and the second full charge/discharge cycle, it was noticed that the charge and discharge values do not vary significantly between each cycle.

Figure 6 shows the results for the anode-free reference battery cell, representing the voltage (V) as a function of the specific charge (expressed in Ah/kg). After the first charge, represented by line 203, the battery cell was discharged (line 205). Line 204 shows the values for the charging and line 205 for the discharging in the subsequent two full charge/discharge cycles. For the first and the second full charge/discharge cycle, it was noticed that the charge and discharge values do not vary significantly between each cycle.

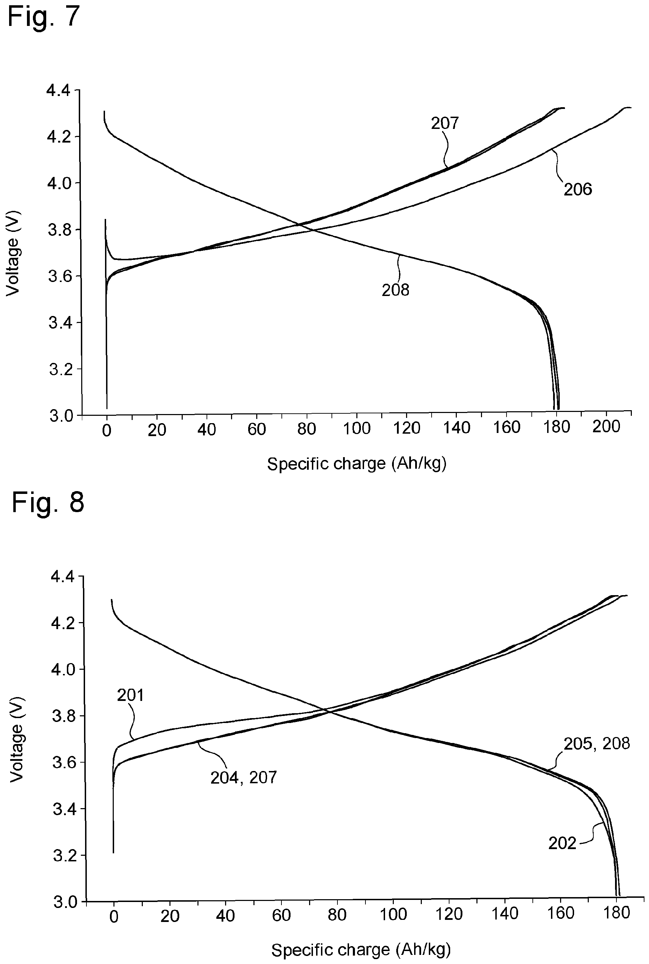

Figure 7 shows the results for the anode comprising reference battery cell, representing the voltage (V) as a function of the specific charge (expressed in Ah/kg). In this battery cell, the lithium metal foil was laminated on the copper foil. After the first charge, represented by line 206, the battery cell was discharged (line 208). Line 207 shows the values for the charging and line 208 for the discharging in the subsequent two full charge/discharge cycles. For the first and the second full charge/discharge cycle, it was noticed that the charge and discharge values do not vary significantly between each cycle.

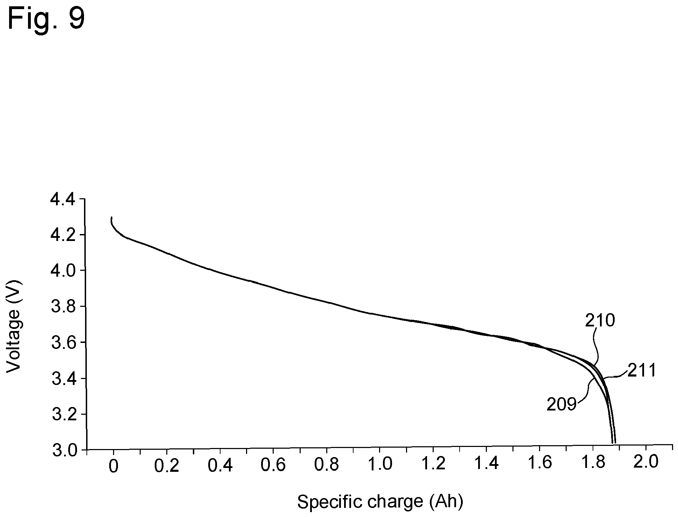

Figure 8 shows the results for the first full charge/discharge cycle for all three battery cells together, which represent the full utilization of the cathode of the battery cells. Figure 9 shows the results for the second discharge curve for all three anode-free battery cells together.

It is clear from Figures 8 and 9 that the battery cell of the present invention shows a performance similar to the reference battery cells. However, the surface area of the electronic conductor used instead of the anode current collector of the reference batteries is more than 10 times smaller. Consequently, the amount of material needed for the anode side of the battery is much lower, which leads to a cheaper battery cell.

### Nomenclature

- 1.: cathode
- 2.: electrolyte
- 3.: electronic conductor
- 4.: high surface area substrate
- 5.: surface of the high surface area substrate
- 6.: surface of the electronic conductor
- 7.: separator
- 8.: anode lead extension
- 9.: cathode current collector
- 10.: cathode
- 100.: anode-free battery cell
- 101.: anode-free battery cell
- 102.: anode-free battery cell
- 103.: anode-free battery
- 200.: first charge - anode-free battery cell 1
- 201.: second and third charge - anode-free battery cell 1
- 202.: first, second and third discharge - anode-free battery cell 1
- 203.: first charge - anode-free battery cell 2
- 204.: second and third charge - anode-free battery cell 2
- 205.: first, second and third discharge - anode-free battery cell 2
- 206.: first charge - anode-free battery cell 3
- 207.: second and third charge - anode-free battery cell 3
- 208.: first, second and third discharge - anode-free battery cell 3
- 209.: second discharge - anode-free battery cell 1
- 210.: second discharge - anode-free battery cell 2
- 211.: second discharge - anode-free battery cell 3

## Claims

1. An anode-free battery cell (100, 101, 102) comprising a cathode (1), an electrolyte (2) and an electronic conductor (3) provided at the anode side of the battery cell (100, 101, 102),
**characterized in that** the battery cell (100, 101, 102) further comprises a high surface area substrate (4) provided between the cathode (1) and the electronic conductor (3), wherein at least a portion of a surface (5) of the high surface area substrate (4) contacts at least a portion of a surface (6) of the electronic conductor (3).

2. The anode-free battery cell (101, 102) according to claim 1, further comprising a separator (7) between the cathode (1) and the high surface area substrate (4).

3. The anode-free battery cell (100, 101, 102) according to any one of the preceding claims, wherein the high surface area substrate (4) has a porosity of at least 40 % as measured by X-ray computed tomography .

4. The anode-free battery cell (100, 101, 102) according to any one of the preceding claims, wherein the high surface area substrate (4) comprises an organic compound, preferably wherein the organic compound is a polymorph of carbon or a polymer selected from the group consisting of cellulose, regenerated cellulose, polypropylene, polyethylene, polyvinylidene difluoride, polytetrafluoroethylene, polyurethane, aramide, and silk.

5. The anode-free battery cell (100, 101, 102) according to any one of the preceding claims, wherein the high surface area substrate (4) comprises an inorganic compound, preferably wherein the inorganic compound comprises lithium lanthanum zirconium oxide and/or a silica polymorph.

6. The anode-free battery cell (100, 101, 102) according to any one of the preceding claims, wherein the high surface area substrate (4) comprises a first area having a first porosity and at least a second area having a second porosity, wherein the first porosity and the second porosity are different and are, individually, at least 40 % as measured by X-ray computed tomography.

7. The anode-free battery cell (100, 101, 102) according to any one of the preceding claims, wherein the high surface area substrate (4) comprises an electrically conductive particulate compound.

8. The anode-free battery cell (100, 101, 102) according to claim 7, wherein the electrically conductive particles of the compound are arranged within the high surface area substrate (4) so that they are electrically insulated from one another.

9. The anode-free battery cell (100, 101, 102) according to claim 7 or claim 8, wherein the electrically conductive particulate compound comprises a metal, an alloy of two or more metals, a polymorph of carbon, or combinations of two or more thereof.

10. The anode-free battery cell (100, 101, 102) according to any one of the preceding claims, wherein the high surface area substrate (4) is a membrane, a foam, a nonwoven, a woven textile or a knitted textile.

11. The anode-free battery cell (100, 101, 102) according to any one of the preceding claims, wherein the electronic conductor (3) comprises a metal, a polymer, a carbon polymorph, one or more of an oxide, a sulphide, a nitride, a carbide, or a silicide, or a combination of two or more thereof, preferably wherein the metal is copper, nickel, lithium or steel, preferably wherein the polymer is poly(3,4-ethylenedioxythiophene) or polyaniline.

12. The anode-free battery cell (102) according to any one of the preceding claims, further comprising an anode lead extension (8), wherein at least a portion of a surface of the anode lead extension (8) contacts at least a portion of a surface of the electronic conductor (3).

13. The anode-free battery cell (102) according to claim 12, wherein the anode lead extension (8) comprises copper, nickel, steel, or a combination of two or more thereof.

14. The anode-free battery cell (100, 101, 102) according to any one of the preceding claims, wherein the battery cell (100, 101, 102) is a secondary battery.

15. Anode-free battery (103) comprising a stack of x anode-free battery cells (100, 101, 102) according to any one of the preceding claims, wherein x is between 2 and 20.
